# EUROPEAN PATENT APPLICATION

(11) **EP 4 647 822 A1**
(43) Date of publication of application: **12.11.2025**
(21) Application number: 25174074.2
(22) Date of filing: 02.05.2025
(51) Int. Cl.: G02B 6/44

(54) **OPTICAL FIBER TERMINAL WITH A CLAMP ASSEMBLY**

(30) Priority: 03.05.2024 IN 202411035364
(71) Applicant: Sterlite Technologies Limited, Gurugram, Haryana 122102 (IN)
(72) Inventor: CAMMAROTA, Ferdinando, 122102 Gurugram (IN); CIRISANO, Emanuele Pietro, 122102 Gurugram (IN)
(74) Representative: Valet Patent Services Limited

(57) **Abstract**

The present disclosure relates to an optical fiber terminal (100) having one or more circular ports (106) to receive a corrugated conduit (108) and a clamp assembly (110) to be engaged with a port of the circular ports (106). In particular, the clamp assembly (110) has a plurality of partial elongated arc bodies (112) and a fastening means (116) adapted to detachably secure the plurality of partial elongated arc bodies (112) to form a clamp body (114) such that the clamp body (114) secures the at least one corrugated conduit (108). Further, the clamp body (114) forms a closed loop structure in the cross section.

## Description

### TECHNICAL FIELD

Embodiments of the present disclosure relate to the field of storage and/or connection terminals of optical fibers and more particularly, relate to an optical fiber cable terminal with a clamp assembly.

This application claims the benefit of Indian Application No. IN202411035364 titled "OPTICAL FIBER TERMINAL WITH A CLAMP ASSEMBLY" filed by the applicant on May 03, 2024, which is incorporated herein by reference in its entirety.

### Background Art

Telecommunications networks include access networks where end-user subscribers connect to service providers. With the advancement of science and technology, various modem technologies are being employed for communication purposes. Over the last few years, there has been a rapid rise in the development and usage of networking technology. This is particularly the case in the field of optical fiber cables and their applications.

Being a critical component of a modem communication network across the globe, optical fiber cables are widely used for communication to meet the increasing demands. Optical fiber cables utilize optical fibers to transmit signals such as voice, video, image, data or information. Optical fibers are strands of glass fiber processed so that light beams transmitted through the glass fiber are subject to total internal reflection wherein a large fraction of the incident intensity of light directed into the fiber is received at the other end of the fiber.

Connectors are conventionally used to protect cables and cable connectors against harmful environmental impacts, such as shock, dirt, strain, moisture or other corrosive substances. Particularly, connectors are fastened on a protective tube, in which a part of the cable, such as a data or power transmission line, is received. Moreover, connector housing is fastened to the protective tube and is used to attach an end of the protective tube to various field installation devices, such as a data transmitter. Further, an opposite end of the protective tube may likewise be fastened to another connector housing, or with an adapter housing which is fixed on the cable.

An optical fiber connector connecting an optical fiber of an optical transmission medium and an optical fiber built in a ferrule of the optical fiber connector to each other by fusion was also known (for example, see U.S. Pat. No. 5,748,819 and Japanese Unexamined Patent Application, First Publication No. 2008-65315). Japanese Unexamined Patent Application, First Publication No. 2002-196189 (particularly, paragraphs 0022 to 0024 and FIGS. 1 to 4) discloses an optical fiber connector precisely positioning optical fibers between two divided elements having an alignment groove (a V groove, a U groove, or the like) used to align optical fibers and butt-jointing the optical fibers.

Currently, cable clamp, a device containing a corrugated tube for transporting cables inside metal and plastic boxes. However, the products used has the following defects (i) once the corrugate is housed inside, it can no more be removed, (ii) the currently used products are not-optimised maximum to contain number of patch cords, and (iii) higher price. Further, the corrugated pipe and the cable clamp both can be damaged while pulling out the corrugated pipe (when necessary).

US Patent application "US10082230B2" discloses a coupling assembly for attaching a corrugated pipe with a connector housing, a sealing unit and a fastener body. Further, the fastener body is divided into two halves which connector together and then gets locked with the connector housing.

Chinese Patent Application "CN103278895B" discloses a corrugated conduit clamp having two cylindrical bodies connected together to hold the conduit clamp inside. However, none of the prior-art references describes about a corrugated cable clamp that can be used while reducing and/or eliminating damage caused to the corrugated conduit while pulling. Thus, to address the drawbacks in the current technologies, there is a constant need of improvements in the sealing and fastening of housings on corrugated tubes, as well as the robustness of a tube connection, would be beneficial.

Accordingly, of the foregoing discussion, there exists a need for an optical fiber terminal and a clamp assembly which to overcome the disadvantages and the above-stated limitations of conventionally known clamps. Therefore, the present disclosure provides an optical fiber cable having a clamp assembly to overcome the above stated disadvantages.

### SUMMARY OF THE DISCLOSURE

Embodiments of present disclosure relates to an optical fiber terminal with a clamp assembly.

According to the first aspect of the present disclosure, the optical fiber terminal has one or more circular ports to receive at least one corrugated conduit and a clamp assembly to be engaged with a port of the one or more circular ports. In particular, the clamp assembly has a plurality of partial elongated arc bodies and at least one fastening means adapted to detachably secure the plurality of partial elongated arc bodies to form a clamp body such that the clamp body secures the at least one corrugated conduit. Further, the clamp body forms a closed loop structure in cross section.

According to second aspect of the present disclosure, each of the plurality of partial elongated arc bodies has one or more inner structures on an inner surface. In particular, one or more inner structures of the plurality of partial elongated arc bodies are adapted to mechanically engage with one or more outer structures provided on an outer surface of the at least one corrugated conduit thereby, securing the at least one corrugated conduit with the clamp body of the clamp assembly.

According to fourth aspect of the present disclosure, the clamp body is defined by a proximal end having a threaded surface. Further, the proximal end is configured to be inserted into a circular port of the one or more circular ports .

According to fifth aspect of the present disclosure, the optical fiber terminal further comprises a locking nut such that the threaded surface at the proximal end is adapted to enable coupling of the locking nut with the proximal end to engage the clamp body with the optical fiber terminal. Further, the locking nut is coupled from an inner housing of the optical fiber terminal.

Another embodiment of the present disclosure relates to a clamp assembly for securing at least one corrugated conduit having a plurality of partial elongated arc bodies and at least one fastening means adapted to detachably secure the plurality of partial elongated arc bodies) to form a clamp body such that the clamp body secures the at least one corrugated conduit. Further, the clamp body forms a circular closed loop structure in a cross section.

According to sixth aspect of the present disclosure, the clamp body is defined by a distal end having the one or more inner structures on the inner surface of the plurality of partial elongated arc bodies to secure the at least one corrugated conduit at the distal end of the clamp body.

According to the seventh aspect of the present disclosure, each of the plurality of partial elongated arc bodies has one or more inner structures on an inner surface. [0006] According to the eighth aspect of the present disclosure, the clamp assembly is attached with at least one circular port of a terminal to engage at least one corrugated conduit with the terminal.

The foregoing solutions of the present disclosure are attained by providing an optical fiber terminal with a clamp assembly.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
FIG. 1 is a pictorial snapshot illustrating a perspective view of an optical fiber terminal in accordance with an embodiment of the present disclosure;
FIG. 2A is a pictorial snapshot illustrating an exploded view of a clamp assembly of the optical fiber terminal in accordance with one embodiment of the present disclosure;
FIG. 2B is a pictorial snapshot illustrating an exploded view of a clamp assembly of the optical fiber terminal in accordance with another embodiment of the present disclosure; and
FIG. 2C is a pictorial snapshot illustrating a perspective view of the clamp assembly of the optical fiber terminal in accordance with an embodiment of the present disclosure.

The optical fiber is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features. Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

TTerm "optical fiber" as used herein refers to a light guide that provides high-speed data transmission. The optical fiber has one or more glass core regions and one or more glass cladding regions. The light moving through the glass core regions of the optical fiber relies upon the principle of total internal reflection, where the glass core regions have a higher refractive index (n1) than the refractive index (n2) of the glass cladding region of the optical fiber.

Term "corrugated conduit" as used herein refers to a component that is used to provide protection to one or more cables passing through it. The corrugated conduits are attached to a port of a terminal via a clamp.

The detailed description of the appended drawings is intended as a description of the currently preferred aspects of the present disclosure, and is not intended to represent the only form in which the present disclosure may be practiced. It is to be understood that the same or equivalent functions may be accomplished by different aspects that are intended to be encompassed within the spirit and scope of the present disclosure.

Moreover, although the following description contains many specifics for the purposes of illustration, anyone skilled in the art will appreciate that many variations and/or alterations to said details are within the scope of the present technology. Similarly, although many of the features of the present technology are described in terms of each other, or in conjunction with each other, one skilled in the art will appreciate that many of these features can be provided independently of other features. Accordingly, this description of the present technology is set forth without any loss of generality to, and without imposing limitations upon, the present technology.

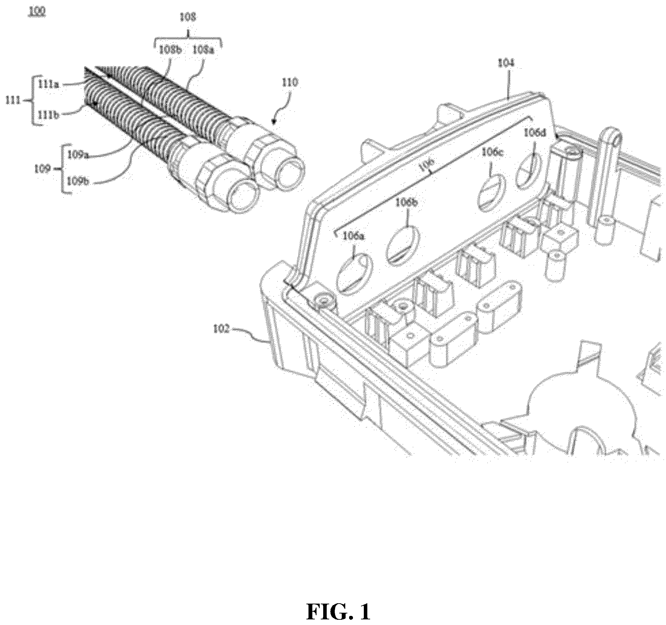

FIG. 1 is a pictorial snapshot illustrating a perspective view of an optical fiber terminal in accordance with an embodiment of the present disclosure. In particular, the terminal 100 may be an optical fiber terminal. Although FIG. 1 illustrates that the terminal 100 is the optical fiber terminal, it will be apparent to a person skilled in the art that the scope of the present disclosure is not limited to it. In various other aspects of the present disclosure, the terminal 100 may be any type of terminal box that may be adapted to house various components and require entry and exit ports for cables, without deviating from the scope of the present disclosure.

In accordance with an embodiment of the present disclosure, the terminal 100 may be designed to facilitate efficient and reliable fiber optic communication. In particular, the terminal 100 may have a box 102 and a panel 104. Moreover, the box 102 may be adapted to house one or more optical components (not shown). Further, the one or more optical components may be, but not limited to, fiber adapters, splice holders, splitter, and the like. Aspects of the present disclosure are intended to include and/or otherwise cover any type of the one or more optical components, known to a person having ordinary skill in the art, without deviating from the scope of the present disclosure.

In accordance with an embodiment of the present disclosure, the terminal 100 may have the panel 104 that may be adapted to be installed within the enclosure 100. In particular, the panel 104 may have one or more circular ports 106 to receive at least one corrugated conduit 108. Moreover, the one or more circular ports 106 of which first through fourth circular ports 106a-106d shown in FIG. 1 are adapted to receive the one or more corrugated conduit 108 of which first and second corrugated conduit 108a-108b are shown. Further, a circular port of the one or more circular ports 106 may be adapted to receive at least one corrugated conduit of the one or more corrugated conduit 108.

In accordance with an embodiment of the present disclosure, the one or more corrugated conduits 108 are configured to provide a protection to one or more cables passing through the one or more corrugated conduits 108. Although FIG. 1 illustrates that the one or more circular ports 106 has four circular ports (i.e., the first through fourth circular ports 106a-106d), it will be apparent to a person skilled in the art that the scope of the present disclosure is not limited to it. In various other aspects, the circular ports 106 may have any number of circular ports, without deviating from the scope of the present disclosure.

The terminal 100 may have a clamp assembly 110 configured to be engaged with a port of the one or more circular ports 106. In particular, the corrugated conduits 108 may be attached to a port of the one or more circular ports 106 of the terminal 100 by way of the clamp assembly 110. As illustrated, each of the at least one corrugated conduit 108 may be attached to a port of the one or more circular ports 106 of the terminal 100 by way of the clamp assembly 110.

Further, the corrugated conduits 108 may have one or more outer structures 109 on an outer surface 111. Specifically, the one or more outer structures 109 may be zig-zag protrusion on the outer surface 111 of the corrugated conduits 108.

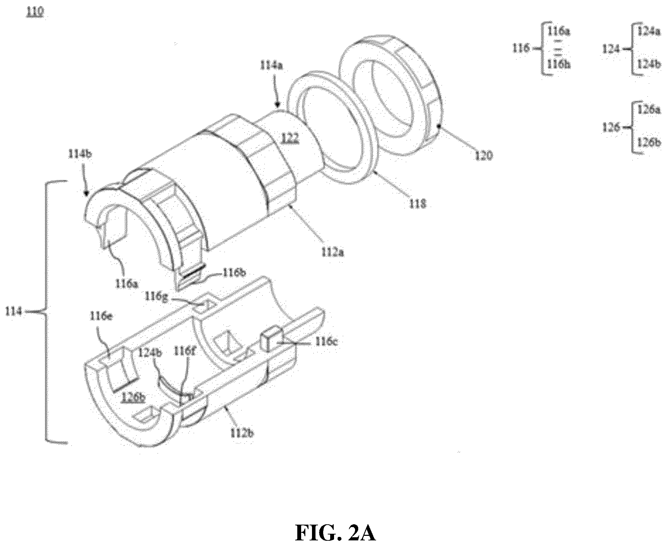

In an exemplary example, the first corrugated conduit 108a may have the one or more outer structures 109a on an outer surface 111a. Similarly, the second corrugated conduit 108b may have the one or more outer structures 109b on an outer surface 111b. Further, the one or more outer structures 109 may be adapted to be mechanically engaged with one or more inner structures 124 (as shown in FIG. 2A) on an inner surface 126 (as shown in FIG. 2A) of the plurality of partial elongated arc bodies 112, thereby, securing the corrugated conduits 108 with the clamp body 114 of the clamp assembly 110.

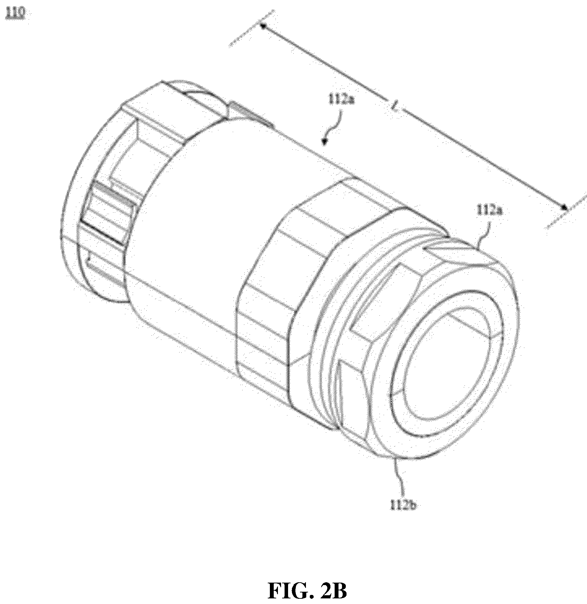

FIGS. 2A and 2B are pictorial snapshots illustrating exploded views of the clamp assembly 110 of the terminal 100 in accordance with one or more embodiment of the present disclosure. In particular, the clamp assembly 110 may have a plurality of partial elongated arc bodies 112 of which first and second partial elongated arc bodies 112a and 112b are shown. Moreover, the first and second partial elongated arc bodies 112a and 112b may be adapted to be detachably secured with one another to form a clamp body 114. Further, the clamp body 114 may be adapted to secure the corrugated conduits 108 within, while the corrugated conduits 108 is coupled to a port of the plurality of ports 106 of the terminal 100 (as shown in FIG. 1).

Although FIG. 2A and 2B illustrate that the plurality of partial elongated arc bodies 112 have two partial elongated arc bodies (i.e., the first and second partial elongated arc bodies 112a and 112b), it will be apparent to a person skilled in the art that the scope of the present disclosure is not limited to it. In various other aspects of the present disclosure, the plurality of partial elongated arc bodies 112 may include more than two partial elongated arc bodies, without deviating from the scope of the present disclosure. In such a scenario, all the partial elongated arc bodies may be detachably secured to form the clamp body 114.

In accordance with an embodiment of the present disclosure, the terminal 100 may further have at least one fastening means 116 adapted to detachably secure the plurality of partial elongated arc bodies 112 to form the clamp body 114 that secures the corrugated conduit 108. , Further, the corrugated conduits 108 is coupled to a port of the plurality of ports 106 of the terminal 100.

In some aspects of the present disclosure, the at least one fastening means 116 may be moulded over each of the plurality of partial elongated arc bodies 112. Alternatively, the at least one of fastening means 116 may be a snap-fit attachment that is adapted to attach the plurality of partial elongated arc bodies 112 to form the clamp body 114. Further, the snap-fit attachment of the at least one of fastening means 116 may be activated by a push pin.

In accordance with an embodiment of the present disclosure,, the at least one fastening means 116 may have first through fourth male fastening means 116a-116d and first through fourth female fastening means 116e-116h. Alternatively, the first through fourth male fastening means 116a-116d may be protruded legs that may be moulded over the first and second partial elongated arc bodies 112a and 112b and the first through fourth female fastening means 116e-116h may be recesses that may be moulded in the first and second partial elongated arc bodies 112a and 112b.

In accordance with an embodiment of the present disclosure,, the first through fourth male fastening means 116a-116d may have a ledge structure on the protruded legs such that the ledge structure on the protruded legs is engaged with the first through fourth female fastening means 116e-116h when the first partial elongated arc body 112a is pushed for snap fitting onto the second partial elongated arc body 112b to form the clamp body 114.

In accordance with an embodiment of the present disclosure,, the clamp assembly 110 may further have an O-ring 118 and a locking nut 120. Further, the clamp assembly 110 i.e., the clamp body 114 may have a proximal end 114a and a distal end 114b such that the proximal end 114a of the clamp body 114 may be inserted into a port of the one or more circular ports 106. In particular, the proximal end 114a of the clamp assembly 110 may have a threaded surface 122 such that the threaded surface 122 enable an engagement of the clamp body 114 with the terminal 100 by way of the locking nut 120. Moreover, the locking nut 120 may be coupled from an inner housing of the terminal 100. Further, the proximal end 114a of the clamp body 114 may be adapted to receive the O-ring 118 to provide an environmental sealing between the locking nut 118 and the terminal 100.

In accordance with an embodiment of the present disclosure, the O-ring 118 and the locking nut 120 may be made up of a material such as, but not limited to, a hardened plastic, a rubber, a metal, and the like. Aspects of the present disclosure are intended to include and/or otherwise cover any type of the material for the O-ring118 and the locking nut 120, without deviating from the scope of the present disclosure.

In accordance with an embodiment of the present disclosure, the clamp body 114 may be defined by the distal end 114b such that the distal end 114b has one or more inner structures 124 on an inner surface 126 of the plurality of partial elongated arc bodies 112 to secure the corrugated conduit 108 at the distal end 114b of the clamp body 114. In particular each of the plurality of partial elongated arc bodies 112 may have the one or more inner structures 124 on an inner surface 126. Moreover, the first and second partial elongated arc bodies 112a and 112b may have one or more first structures 124a (as shown in FIG. 2B) and 124b on the inner surfaces 126a (as shown in FIG. 2B) and 126b, respectively on the inner surfaces 126a and 126b, respectively. Further, the one or more inner structures 124 may be adapted to be mechanically engaged with the one or more outer structures 109 (as shown in FIG. 1) of the plurality of corrugated conduits 108, thereby, securing the corrugated conduits 108 with the clamp body 114 of the clamp assembly 110.

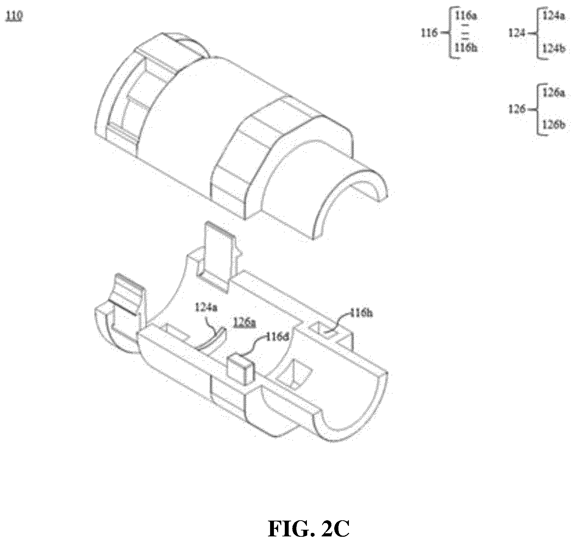

FIG. 2C is a pictorial snapshot illustrating a perspective view of the clamp assembly 110 of the optical fiber terminal 100 in accordance with an embodiment of the present disclosure.

As illustrated, the clamp assembly 110 may have the first and second partial elongated arc bodies 112a and 112b. In particular, the first and second partial elongated arc bodies 112a and 112b may be adapted to be detachably secured with one another to form the clamp body 114. Moreover, he clamp body 114 may form a closed loop structure in cross section. Further, the cross section of the closed loop structure formed by the clamp body 114 may be circular.

In some aspects of the present disclosure, the clamp assembly 110 may have a cylindrical shape. Further, the clamp assembly 110 may have a length (L) in a range of 50 millimetres (mm) to 55 mm.

Advantageously, the terminal 100 of the present disclosure provides a housing equipped with one or more circular ports 106 for incoming and outgoing optical fibers cables, enabling seamless connectivity within a network infrastructure. Moreover, the terminal 100 incorporates advanced optical components to ensure minimal signal loss and maximum data transmission rates. Additionally, the terminal 100 has a compact design and user-friendly interface that make the terminal 100 suitable for various applications, including telecommunications, data centres, and residential networks. Further, the clamp assembly 110 of the present disclosure may be assembled by joining a plurality of partial elongated arc bodies 112 together and locking the attached partial elongated arc bodies 112 by way of at least one attachment means 116. Specifically, the plurality of partial elongated arc bodies 112 provides easiness for installing, removing, and replacing the clamp assembly 110 without damage.

Additionally, the clamp assembly 110 is designed to at least one corrugated conduit 108, facilitating an installation of the at least one corrugated conduit 108 in the terminal 100, and to be re-opened in the case of remediation. Further, the clamp assembly 110 enables the installation and removal of the at least one corrugated conduit 108 without damaging the clamp assembly 110 and the at least one corrugated conduit 108.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber terminal (100) for fiber storage and connection, **characterized in that**;
one or more circular ports (106) to receive at least one corrugated conduit (108);
a clamp assembly (110) to be engaged with a port of the one or more circular ports (106),
wherein the clamp assembly (110) comprising:
a plurality of partial elongated arc bodies (112);
at least one fastening means (116) adapted to detachably secure the plurality of partial elongated arc bodies (112) to form a clamp body (114) such that the clamp body (114) secures the at least one corrugated conduit (108);
wherein the clamp body (114) forms a circular shaped closed loop structure in a cross section.

2. The optical fiber terminal (100) of claim 1, wherein each of the plurality of partial elongated arc bodies (112) has one or more inner structures (124) on an inner surface (126).

3. The optical fiber terminal (100) of claim 2, wherein the one or more inner structures (124) of the plurality of partial elongated arc bodies (112) are adapted to mechanically engage with one or more outer structures (109) provided on an outer surface (111) of the at least one corrugated conduit (108), thereby, securing the at least one corrugated conduit (108) with the clamp body (114) of the clamp assembly (110).

4. The optical fiber terminal (100) of claim 1, wherein the plurality of partial elongated arc bodies (112) comprising two or more partial elongated arc bodies.

5. The optical fiber terminal (100) of claim 1, wherein the clamp body (114) is defined by a proximal end (114a) having a threaded surface (122), wherein the proximal end (114a) is configured to be inserted into a circular port of the one or more circular ports (106).

6. The optical fiber terminal (100) of claim 1, wherein the optical fiber terminal (100) further comprising:
a locking nut (120) such that the threaded surface (122) at the proximal end (114a) is adapted to enable coupling of the locking nut (120) with the proximal end (114a) to engage the clamp body (114) with the optical fiber terminal (100),
wherein the locking nut (120) is coupled from an inner housing of the optical fiber terminal (100).

7. The optical fiber terminal (100) of claim 2, wherein the clamp body (114) is defined by a distal end (114b) having the one or more inner structures (124) on the inner surface (126) of the plurality of partial elongated arc bodies (112) to secure the at least one corrugated conduit (108) at the distal end (114b) of the clamp body (114).

8. A clamp assembly (110) for securing at least one corrugated conduit (108), where the clamp assembly (110) **characterized in that**:
a plurality of partial elongated arc bodies (112); and
at least one fastening means (116) adapted to detachably secure the plurality of partial elongated arc bodies (112) to form a clamp body (114) such that the clamp body (114) secures the at least one corrugated conduit (108);
wherein the clamp body (114) forms a circular closed loop structure in a cross section.

9. The clamp assembly (110) of claim 8, wherein each of the plurality of partial elongated arc bodies (112) has one or more inner structures (124) on an inner surface (126).

10. The clamp assembly (110) of claim 9, wherein the one or more inner structures (124) of the plurality of partial elongated arc bodies (112) are adapted to mechanically engage with one or more outer structures (109) provided on an outer surface (111) of the at least one corrugated conduit (108), thereby, securing the at least one corrugated conduit (108) with the clamp body (114) of the clamp assembly (110).

11. The clamp assembly (110) of claim 8, wherein the clamp assembly (110) is attached with at least one circular port (106) of a terminal (100) to engage at least one corrugated conduit (108) with the terminal (100).

12. The clamp assembly (110) of claim 8, where the clamp body (114) is defined by a proximal end (114a) having a threaded surface (122), and the proximal end (114a) is configured to be inserted into a circular port of the one or more circular ports (106).

13. The clamp assembly (110) of claim 8, wherein the clamp assembly further comprising a locking nut (120) such that the threaded surface (122) at the proximal end (114a) is adapted to enable coupling of the locking nut (120) with the proximal end (114a) to engage the clamp body (114) with the optical fiber terminal (100).

14. The clamp assembly (110) of claim 13, wherein the locking nut (120) is coupled from an inner housing of the optical fiber terminal (100).

15. The clamp assembly (110) of claim 8, wherein the clamp body (114) is defined by a distal end (114b) having the one or more inner structures (124) on the inner surface (126) of the plurality of partial elongated arc bodies (112) to secure the at least one corrugated conduit (108) at the distal end (114b) of the clamp body (114).
